(19) Europäisches Patentamt
European Patent Office
Office européen des brevets

(11) **EP 3 749 919 B1**

(12) **FASCICULE DE BREVET EUROPEEN**

(45) Date de publication et mention de la délivrance du brevet:
**21.06.2023 Bulletin 2023/25**

(21) Numéro de dépôt: **19703649.4**

(22) Date de dépôt: **25.01.2019**

(51) Classification Internationale des Brevets (IPC):
***G01B 11/24*** *(2006.01)*

(52) Classification Coopérative des Brevets (CPC):
**G01B 11/2441**

(86) Numéro de dépôt international:
**PCT/EP2019/051894**

(87) Numéro de publication internationale:
**WO 2019/149638 (08.08.2019 Gazette 2019/32)**

(54) **PROCÉDÉ ET DISPOSITIF D'INSPECTION D'UNE SURFACE D'UN OBJET COMPORTANT DES MATÉRIAUX DISSIMILAIRES**

VERFAHREN UND VORRICHTUNG ZUR INSPEKTION EINER OBERFLÄCHE EINES GEGENSTANDES AUS UNÄHNLICHEN MATERIALIEN

METHOD AND DEVICE FOR INSPECTING A SURFACE OF AN OBJECT COMPRISING NON-SIMILAR MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2018 FR 1850936**

(43) Date de publication de la demande:
**16.12.2020 Bulletin 2020/51**

(73) Titulaires:
• **Unity Semiconductor**
**38330 Montbonnot-Saint-Martin (FR)**
• **Commissariat à l'Energie Atomique et aux Energies Alternatives**
**75015 Paris (FR)**

(72) Inventeurs:
• **BOULANGER, Jean-François**
**38330 SAINT ISMIER (FR)**
• **GODNY, Stéphane**
**38700 CORENC (FR)**

(74) Mandataire: **IPAZ**
**Bâtiment Platon**
**Parc Les Algorithmes**
**91190 Saint-Aubin (FR)**

(56) Documents cités:
**US-A1- 2004 263 840    US-A1- 2012 229 621
US-A1- 2017 105 618    US-B1- 6 215 555**

**Description**

**Domaine technique**

La présente invention concerne un procédé de mesure du profil ou de la forme d'une surface d'un objet pouvant comprendre des structures ou motifs en au moins deux matériaux différents. Elle concerne également un dispositif de mesure d'une surface d'un objet mettant en oeuvre un tel procédé.

Le domaine de l'invention est plus particulièrement, mais de manière non limitative, celui de la profilométrie optique.

**État de la technique**

La profilométrie optique permet de déterminer le profil ou la topographie d'une face ou d'une surface d'un objet, en vue de déterminer une forme de surface, ou d'imager des motifs, une rugosité, etc., présents sur la face et obtenir leur hauteur. Un profilomètre optique est décrit dans US 2012/0229621 A1.

Elle est basée sur la mesure, puis l'étude, d'un signal interférométrique obtenu entre un rayonnement optique de référence et un rayonnement optique d'inspection issus d'une même source, envoyés respectivement vers une surface de référence et vers la surface inspectée, et réfléchis par lesdites surfaces. En faisant varier relativement le chemin optique des rayonnements de référence ou d'inspection, il est possible de déterminer à partir de l'analyse de franges d'interférences la différence de longueur du chemin optique parcouru par le rayonnement optique d'inspection réfléchi relativement à celle du chemin optique du rayonnement de référence, et en déduire la profondeur ou la hauteur de la surface inspectée en chaque point de mesure, et donc de détecter la hauteur relative des différents motifs ou structures présents sur ladite surface, tels que des marches ou des tranchées.

Cependant, l'onde réfléchie sur la surface de l'objet subit un déphasage qui dépend des caractéristiques physiques des matériaux, telles que leurs indices de réfraction complexes et les épaisseurs pour les empilements de couches (pour les matériaux transparents). Ce déphasage à la réflexion se rajoute au déphasage dû à la topographie décrit ci-dessus. Lorsque les motifs ou structures présents sur la surface des objets sont réalisés en des matériaux différents, le déphasage à la réflexion est alors différent pour chacun des matériaux. Ainsi, la hauteur relative obtenue entre des motifs en matériaux différents est erronée. Par exemple, une marche constituée d'un certain matériau déposé sur un substrat d'un autre matériau peut paraître plus haute qu'elle ne l'est en réalité, ou au contraire, une marche peut apparaître plus basse voire même comme une tranchée. De même, deux surfaces coplanaires peuvent apparaître de hauteur différente. De telles mesures de profilométrie ne peuvent pas être exploitées convenablement.

Pour pallier à cet inconvénient, il est connu de calculer des phases théoriques à la réflexion en exploitant les informations que l'on a à priori sur les matériaux ou les empilements de couches de matériaux présents. On construit ainsi des modèles théoriques de réflectivité que l'on utilise pour corriger les mesures. Cette approche est toutefois très lourde et d'efficacité limitée en particulier à cause des incertitudes sur les informations à priori dont on dispose. En outre, pour corriger une mesure topographique de cette manière, il est également nécessaire d'identifier les différents matériaux présents dans le champ microscopique ce qui peut poser des difficultés sur des structures multiples ou sous-résolues.

**Exposé de l'invention**

Un but de la présente invention est de proposer un procédé et un système de mesure du profil d'une surface d'un objet qui permettent de remédier à ces inconvénients.

Un autre but de la présente invention est de proposer un procédé et un système de mesure du profil d'une surface d'un objet sans l'utilisation de connaissances a priori sur la nature des matériaux et la géométrie des motifs.

Un autre but de la présente invention est de proposer un procédé et un système de mesure du profil d'une surface d'un objet permettant de mesurer avec précision la hauteur relative des motifs ou structures présents sur la surface sans modification complexe ou onéreuse des moyens de mesure existants.

Ces objectifs sont atteints au moins en partie avec un procédé de mesure du profil d'une surface d'un objet à mesurer, notamment comprenant des zones ou des structures en au moins deux matériaux différents, l'objet faisant partie d'une pluralité d'objets sensiblement identiques, la pluralité d'objets comprenant en outre au moins un objet de référence ayant au moins une surface de référence, le procédé comprenant les étapes suivantes :

- détermination d'une fonction de correction, à partir d'un premier signal de profil d'une première surface de référence et d'un second signal de profil d'une seconde surface de référence, la seconde surface de référence étant métallisée ;
- acquisition d'un signal de profil de la surface de l'objet à mesurer; et
- application de la fonction de correction au signal de profil de la surface de l'objet à mesurer pour obtenir un signal de profil corrigé ;

dans lequel les signaux de profil sont obtenus à partir de mesures interférométriques.

Le procédé selon l'invention peut avantageusement être mis en oeuvre pour mesurer le profil d'une surface d'un objet à mesurer, laquelle surface comprenant des zones ou des structures en au moins deux matériaux différents. Bien entendu, il peut également être mis en oeuvre pour mesurer le profil d'une surface d'un objet à mesurer homogène, ou ne comprenant qu'un matériau.

Dans le cadre de l'invention, un profil d'une surface correspond à la hauteur relative, ou à la hauteur par rapport à une référence, d'un ensemble de points de la surface répartis selon un ou deux axes (X, Y) d'un système de référence. Le profil de la surface est donc représentatif de la forme de cette surface et vise à déterminer notamment des hauteurs relatives de structures présentes et/ou des états de surface comme des mesures de rugosité.

Un signal de profil peut être ou correspondre à un profil, ou à une grandeur représentative d'un profil.

La fonction de correction est une fonction qui, appliquée à un signal de profil, renvoie un signal de profil corrigé. Elle peut comprendre par exemple une combinaison avec un signal de profil de correction, ou avec une grandeur représentative d'un profil de correction.

Dans le cadre de l'invention, des objets dits « sensiblement identiques » sont des objets qui sont supposés être identiques, ou identiques en théorie, ou par conception, mais qui peuvent présenter des variations ou des différences qui proviennent, par exemple, d'une variabilité ou d'incertitudes de leur procédé de fabrication. Ces objets « sensiblement identiques » peuvent notamment comprendre une surface avec des zones de même localisation et de mêmes matériaux, mais dont les profils présentent des différences, au moins en certains endroits. Ainsi, la pluralité d'objets peut être issue notamment d'une série ou un lot de fabrication, ou d'un même procédé de fabrication. Il peut s'agir, par exemple, d'une série ou d'un lot de production de substrats (wafers, ...) comportant des composants optiques ou électroniques.

Les mesures interférométriques sont réalisées en utilisant des techniques d'interférométrie optique ou d'interférométrie fonctionnant dans la bande de fréquence des térahertz, connues de l'homme du métier. Ces mesures interférométriques exploitent les interférences entre un faisceau ou un rayonnement de référence et un faisceau ou un rayonnement d'inspection réfléchi par la surface à inspecter. Ces mesures interférométriques permettent de déterminer une altitude ou une hauteur en différents points de cette surface. Ces altitudes combinées produisent des signaux de profils représentatifs d'une forme ou d'un profil (en altitude) de cette surface.

La seconde surface de référence est métallisée, c'est-à-dire qu'elle comporte une couche de métal déposée préalablement aux mesures interférométriques. La couche de métal est homogène sur toute la surface et son épaisseur est de telle sorte qu'une onde de mesure incidente venant d'un système de mesure soit complètement réfléchie par la surface métallisée et ne pénètre pas dans la couche métallique. Par ailleurs, cette couche de métal est suffisamment fine pour être conforme, c'est-à-dire qu'elle reproduit fidèlement à sa surface le profil ou la forme de la surface qu'elle recouvre.

De préférence, la première surface de référence n'est pas métallisée, ou tout au moins elle n'est pas modifiée dans le sens où elle n'a pas subi un dépôt d'une couche de métal préalablement aux mesures interférométriques. Toutefois, bien entendu, la première surface peut comprendre des zones métallisées si elles font partie de l'objet à mesurer.

Le procédé selon l'invention propose ainsi de choisir, parmi une pluralité d'objets faisant par exemple partie d'une même série de production desdits objets, au moins un objet de référence qui est utilisé pour déterminer une fonction ou un profil de correction, notamment à chaque localisation d'intérêt. Cette fonction ou ce profil de correction est ensuite appliqué à toutes les mesures profilométriques effectuées sur les autres objets à mesurer, par exemple de cette série de production.

Ainsi, en supposant que les objets sont suffisamment identiques entre eux et à l'objet de référence, au moins en ce qui concerne la réflectivité complexe des zones ou des structures présentes, le procédé selon l'invention permet de corriger les mesures profilométriques afin d'obtenir les profils corrigés de tous les objets. Le profil corrigé représente la hauteur relative correcte des différentes zones ou structures sur la surface des objets.

L'influence du déphasage à la réflexion sur la surface, dépendant des caractéristiques physiques de différents types de matériaux présents sur la surface des objets, sur la hauteur des zones ou motifs mesurée peut alors être éliminée, grâce aux mesures de référence. Seul l'objet de référence reste ensuite inutilisable dû à la métallisation de sa surface.

Il est à noter que la « perte » de l'objet de référence métallisé n'est pas très gênant car il est d'usage courant lors de la production de substrats (wafers, ...) comportant des composants optiques ou électroniques, d'en métalliser certains pour effectuer des mesures destinées à des contrôles de qualité par prélèvement. De ce point de vue, l'invention permet de minimiser le nombre d'objets métallisés et donc détruits en permettant d'effectuer des contrôles non destructifs sur tout ou partie des objets produits. En outre, l'invention permet de contrôler des objets réellement produits et utilisables et donc non détruits, par contraste avec des méthodes de contrôle destructif par prélèvement.

Ainsi, le procédé selon l'invention peut avantageusement être utilisé pour le contrôle du processus de production des objets. La qualité du processus peut ainsi être surveillée, et des paramètres du processus peuvent être ajustés en cas de déviation du profil souhaité. Comme expliqué précédemment, seule une faible quantité d'objets (par exemple un par lot ou par série de fabrication) est sacrifiée pour constituer les objets de référence.

Aussi, pour l'étape de détermination, aucune connaissance *a priori* sur la nature ou l'épaisseur des matériaux des surfaces, ou sur la géométrie des couches ou motifs n'est nécessaire. Par conséquent, le procédé selon l'invention peut être mis en oeuvre par les dispositifs de mesure actuels, en combinaison avec un dispositif de dépôt de couche de métal, qui est connu de l'homme du métier. Aucun ajout de matériel spécifique n'est nécessaire.

Avantageusement, les étapes d'acquisition d'un signal de profil et d'application de la fonction de correction peuvent être réalisées pour une pluralité d'objets à mesurer issus d'une même série de production.

De même, l'étape de détermination d'une fonction de correction peut être réalisée avec au moins un objet de référence issu d'une même série de production que les objets à mesurer.

Ainsi, la fonction de correction peut être appliquée à chacune des mesures de profil de tous les objets à mesurer de la pluralité d'objets, provenant par exemple d'une même série de production. Il est alors possible de connaître la variabilité du procédé de fabrication d'un objet à l'autre, ou dans le temps. De plus, seulement un seul objet ou échantillon de la série inspectée devient inutilisable par la suite du fait de la métallisation de sa surface.

Avantageusement, la seconde surface de référence peut correspondre à la première surface de référence, métallisée (ou après avoir été métallisée), d'un même objet de référence.

Dans ce cas, un seul objet de référence peut être choisi, et les signaux de profil de référence sont acquis avant et après métallisation de la surface de référence.

Alternativement, la première surface de référence et la seconde surface de référence peuvent être des surfaces correspondantes de deux objets de référence différents.

Dans ce mode de réalisation, la fonction de correction est déterminée à partir de deux objets de référence dont l'un seulement a une surface métallisée.

La fonction de correction peut également être générée à partir d'une pluralité de mesures sur, respectivement, une pluralité de premières surfaces de référence et une pluralité de secondes surfaces de référence, appartenant à une pluralité d'objets de référence, identiques ou différents. On peut ainsi obtenir une fonction de correction correspondant à une moyenne des corrections déterminées sur la pluralité d'objets de référence.

Le procédé selon l'invention peut comprendre une étape de métallisation, comprenant un dépôt conforme d'une couche de métal sur une surface de référence d'un objet de référence.

Cette couche de métal doit être suffisamment épaisse pour ne pas être transparente à la lumière mais suffisamment mince pour ne pas modifier la forme de la surface, et donc être bien conforme. En pratique, elle peut être constituée d'une couche de l'ordre de quelques dizaines de nanomètres de métal (par exemple 40 nm de tantale).

Cette étape de métallisation peut être réalisée en mettant en oeuvre des techniques connue de l'homme du métier, tel que par exemple des techniques de type CVD (dépôt chimique en phase vapeur), ou de type PVD (dépôt physique en phase vapeur). Parmi les techniques de type PVD, on peut citer notamment l'évaporation sous vide et la pulvérisation cathodique (*sputtering*).

Avantageusement, l'étape de détermination de la fonction de correction peut être réalisée en plusieurs positions, dites d'intérêt, de la première et de la seconde surface de référence, de localisation identique sur, respectivement, la première surface de référence et la seconde surface de référence. En particulier, les positions d'intérêts peuvent être choisies de sorte que chaque position d'intérêt de la première surface de référence corresponde à une même position d'intérêt de la seconde surface de référence.

Les positions d'intérêt correspondent à des points d'intérêt dans les signaux de profil (ou les profils) de la première et de la seconde surface de référence. La fonction de correction peut ainsi être déterminée à partir des valeurs des signaux de profil de la première et de la seconde surface de référence à ces points d'intérêt. Elle constitue ainsi un profil de correction qui permet de corriger des erreurs systématiques dans les signaux de profil.

L'étape d'acquisition d'un signal de profil peut être réalisé en plusieurs positions, dites de mesure, de la surface de l'objet à mesurer, de localisation identique aux positions d'intérêt des surfaces de référence, ou localisés dans des zones de mêmes caractéristiques (c'est-à-dire de mêmes matériaux et, de préférence, de même configuration géométrique de structures) que les positions d'intérêt. L'étape d'application de la fonction de correction peut être réalisée pour lesdites positions de mesure de la surface de l'objet, en prenant en compte les positions d'intérêt correspondants.

De même que précédemment, les positions de mesure correspondent à des points de mesure dans le signal de profil de la surface de l'objet à mesurer. La fonction de correction (ou le profil de correction) peut ainsi être appliquée au signal de profil de la surface de l'objet à mesurer, aux points de mesure correspondant aux positions de mesure.

Selon des modes de mise en oeuvre, l'étape de détermination d'une fonction de correction peut comprendre une différence (ou une soustraction) entre le second signal de profil et le premier signal de profil, les deux signaux de profil provenant des mesures de référence sur les surfaces de référence. Cette étape peut produite un signal de profil de correction.

Une telle étape de différence ou de soustraction est peu complexe à mettre en oeuvre, nécessite peu de ressources et un temps de traitement très court.

Selon des modes de mise en oeuvre, l'étape d'application de la fonction de correction peut comprendre une sommation, éventuellement algébrique, d'un signal de profil de correction et du signal de profil.

Une telle étape de sommation est peu complexe à mettre en oeuvre, nécessite peu de ressources et un temps de traitement très court.

Suivant des modes de mise en oeuvre, le procédé selon l'invention peut comprendre une étape d'alignement géométrique du second signal de profil de la seconde surface de référence par rapport au premier signal de profil de la première surface de référence. Cette étape peut être réalisée lors de la détermination d'une fonction de correction.

Suivant des modes de mise en oeuvre, le procédé selon l'invention peut comprendre une étape d'alignement géométrique du signal de profil de la surface de l'objet à mesurer par rapport au premier ou au second signal de profil d'une surface de référence. Cette étape peut être réalisée lors de l'application de la fonction de correction, pour s'assurer que la fonction de correction est bien « positionnée » spatialement par rapport à la surface de l'objet à mesurer.

Ces étapes d'alignement peuvent comprendre l'application de fonctions de transformations spatiales telles que par exemple des translations, rotations et/ou grandissement à au moins l'un des signaux de profils, de sorte que les signaux de profils se superposent au mieux spatialement. Elle permet de corriger ainsi des erreurs du dispositif d'acquisition, comme d'éventuelles erreurs de positionnement de l'objet.

Suivant des modes de mise en oeuvre, le procédé selon l'invention peut être mis en oeuvre pour mesurer le profil d'une surface d'un objet à mesurer comprenant un substrat, ou un élément réalisé sur un substrat.

Le substrat peut être un substrat pour réaliser des composants d'optique intégrée, par exemple de type verre. Ce peut être également un substrat semiconducteur, par exemple en silicium. Il peut être, ou comprendre, de manière non limitative et selon les termes anglais usuels, un wafer, un panel, un wafer carrier, un rebuilt wafer, un wafer on frame, etc.

L'élément réalisé sur le substrat peut comprendre, par exemple, une puce ou un circuit électronique ou optique, et/ou des structures telles que des motifs, des réseaux (*grating*), des tranchées, des vias ou des éléments de connexion.

Suivant des modes de mise en oeuvre, le procédé selon l'invention peut comprendre des étapes :

- de détermination d'une fonction de correction à partir d'au moins un substrat de référence,

- d'acquisition d'un signal de profil à partir d'un autre substrat à mesurer.

Suivant un autre aspect de la même invention, il est proposé un dispositif de mesure du profil d'une surface d'un objet, la surface comprenant des zones en au moins deux matériaux différents, l'objet faisant partie d'une pluralité d'objets sensiblement identiques provenant d'une même série de production desdits objets, la pluralité d'objets comprenant au moins un objet de référence ayant au moins une surface de référence, le dispositif comprenant :

- un dispositif de mesure interférométrique agencé pour acquérir, respectivement, un premier signal de profil d'une première surface de référence, un second signal de profil d'une seconde surface de référence métallisée, et un signal de profil de la surface de l'objet à mesurer ;
- un module de traitement, configuré pour déterminer une fonction de correction à partir du premier signal de profil et du second signal de profil, et appliquer ladite fonction de correction au signal de profil de la surface de l'objet à mesurer pour obtenir un signal de profil corrigé.

La configuration du module de traitement peut être réalisée de manière électronique et/ou informatique, en particulier avec des instructions exécutables par un processeur ou une puce électronique.

Le module de traitement peut être intégré au dispositif de mesure interférométrique, ou être externe au dispositif de mesure et relié audit dispositif de mesure de manière filaire ou sans fil.

Selon un mode de réalisation avantageux, le dispositif de mesure interférométrique peut comprendre un capteur interférométrique plein champ. Selon des exemples non limitatifs, le capteur interférométrique peut comprendre un interféromètre optique à décalage de phase (PSI, pour le terme anglais *Phase Shift Interferometer*) ou un interféromètre à faible cohérence à balayage vertical (VSI, pour le terme anglais *Vertical Scan Interferometer*).

Suivant des modes de mise en oeuvre, le dispositif de l'invention peut en outre comprendre un dispositif de dépôt de couche de métal pour déposer une couche de métal sur la seconde surface de référence, préalablement à l'acquisition du signal interférométrique de la seconde surface de référence.

## Description des figures et modes de réalisation

D'autres avantages et caractéristiques de l'invention apparaîtront à la lecture de la description détaillée de mises en oeuvre et de modes de réalisation nullement limitatifs, et des figures annexées dans lesquelles :

- la Figure 1 est une représentation schématique d'un mode de réalisation non limitatif d'un procédé de mesure selon l'invention ;
- la Figure 2 montre un exemple d'une surface à mesurer d'un objet ;
- les Figures 3a et 3b représentent respectivement des schémas d'un wafer métallisé et d'un wafer non-métallisé, chaque wafer comportant plusieurs puces ;
- les Figures 4a-4c sont des représentations d'un exemple non limitatif de mesure de profil d'une surface d'un objet tel qu'un wafer avec la présente invention ;
- les Figures 5a et 5b représentent un exemple non limitatif d'un résultat de mesure obtenu avec la présente invention ; et
- la Figure 6 est une représentation schématique d'un exemple de réalisation non limitatif d'un système de mesure selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

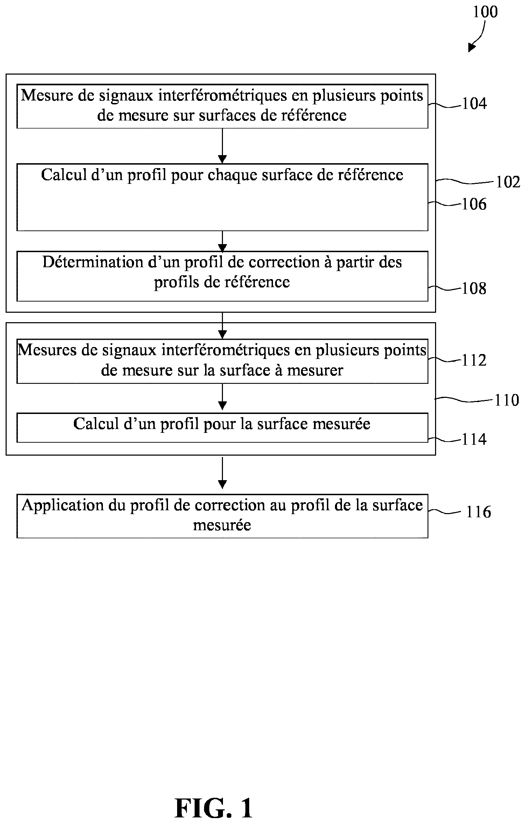

La Figure 1 est une représentation schématique d'un exemple de réalisation non limitatif d'un procédé de mesure du profil d'une surface d'un objet selon l'invention.

L'objet dont une ou plusieurs surfaces sont à inspecter ou à mesurer pour en déterminer le profil fait partie d'une pluralité d'objets sensiblement identiques. Dans les modes de mise en oeuvre de l'invention illustrés en relation avec les figures, et sans que cela ait un caractère limitatif, la pluralité d'objets à mesurer est constituée d'une pluralité de substrats semiconducteurs, par exemple sous la forme de wafers comportant des circuits électroniques, ou des puces, ou d'autres composants semi-conducteurs. Ces objets (ou wafers) peuvent par exemple faire partie d'une même série de production, et donc être supposément identiques (ou sensiblement identiques) aux variations de procédé près.

La pluralité d'objets comprend également au moins un objet de référence ayant au moins une surface de référence. Ce ou ces objets de référence peuvent être par exemple un ou des wafers issus d'une même série que les objets à mesurer, ou issu d'une série de référence.

Le procédé 100 comprend une étape 102 de calibration réalisée à l'aide d'une première surface de référence et une seconde surface de référence.

La phase de calibration 102 comprend une étape 104 de mesure d'un signal interférométrique en plusieurs positions de mesure sur les deux surfaces de référence. Les surfaces de références sont des surfaces du ou des objets de référence.

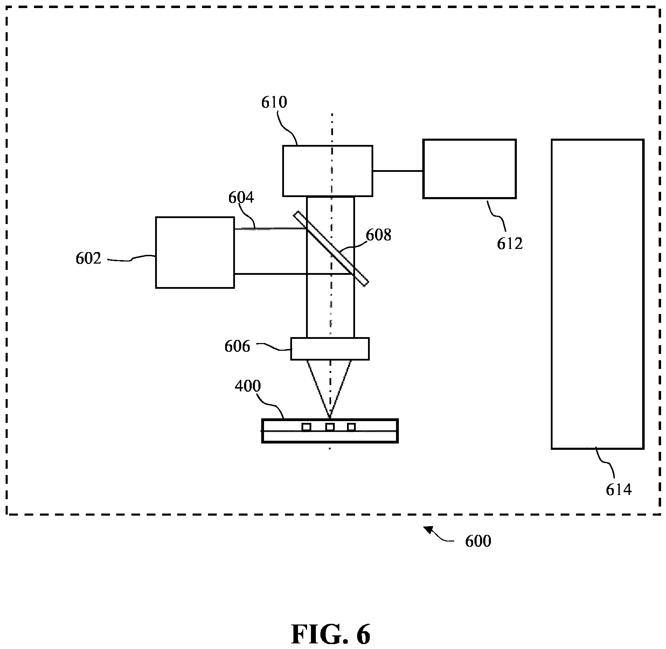

Les mesures interférométriques sont effectuées par un système de mesure comprenant, par exemple, un capteur interférométrique optique plein champ tel qu'illustré à la Figure 6. Ce capteur interférométrique comprend un système d'imagerie qui fait correspondre des positions de mesure sur les surfaces avec des pixels du champ de vue du capteur, délivrant ainsi un signal interférométrique pour chaque pixel de ce capteur, ou point de mesure.

La seconde surface de référence est métallisée, c'est-à-dire qu'elle comporte une couche de métal déposée préalablement à l'étape 102 de mesure. La métallisation de la surface consiste notamment en un dépôt de couche métallique homogène et conforme sur toute la surface. L'épaisseur de la couche métallique doit être ajustée de telle sorte qu'une onde de mesure incidente venant du système de mesure soit complètement réfléchie par la surface métallisée, sans atteindre la surface de l'objet et donc sans être affectée par les propriétés des matériaux ou des couches de matériaux de l'objet. Par ailleurs, la couche métallique doit être suffisamment fine pour ne pas modifier le relief ou le profil de la surface de l'objet.

En pratique, la couche métallique peut être réalisé par exemple par une technologie de dépôt sous vide, par exemple par évaporation (PVD). Elle peut être constituée d'une couche de l'ordre de 40 nm de tantale.

Le procédé comprend en outre une étape 106 de calcul d'un signal de profil $\hat{h}(x,y)$, appelé dans la suite plus simplement profil $\hat{h}(x,y)$, pour chacune des surfaces de référence. Ces profils $\hat{h}(x,y)$ sont obtenus à partir des signaux interférométriques mesurés aux points de mesure $(x,y)$ correspondant respectivement à des positions de mesure sur les surfaces de référence. Pour cela, la phase $\varphi$ de chaque signal interférométrique est obtenue grâce à des algorithmes d'extraction de phase connus, par exemple des algorithmes de PSI (interférométrie à décalage de phase). Cette phase $\varphi$ dépend du déphasage $\psi$ à la réflexion de l'onde de mesure et d'une contribution topographique venant de la forme de la surface mesurée. La phase $\varphi$ est ensuite utilisée pour déterminer le profil $\hat{h}$, qui correspond aux hauteurs mesurées de la surface aux positions de mesure correspondantes :

$$\hat{h} = h + \psi \frac{\lambda}{4\pi} \; ,$$

où $h$ est l'ensemble des hauteurs ou altitudes réelles de la surface et $\lambda$ est la longueur d'onde de mesure. La valeur du déphasage $\psi$ dépend du matériau de la surface à la position de mesure concerné.

Par la suite, on appellera premier profil $\hat{h}(x,y)$ celui de la première surface de référence et second profil $\hat{h}_2(x, y)$, celui de la seconde surface de référence. Le premier et le second profil correspondent à des acquisitions de référence. Le déphasage à la réflexion sur la seconde surface de référence métallisée est constant sur toute la surface, $\psi_2(x,y) = \psi_2$, tandis que le déphasage à la réflexion $\psi_1(x,y)$ sur la première surface de référence dépend de la localisation sur la surface correspondant au point de mesure $(x,y)$ du signal interférométrique mesuré.

Lors d'une étape 108, une fonction $C(x,y)$ de correction, ou profil $C(x,y)$ de correction, est déterminée à partir du premier profil $\hat{h}_1(x,y)$ et du second profil $\hat{h}_2(x,y)$ pour chaque point $(x,y)$ de mesure, appelé dans ce cas point d'intérêt. Dans le mode de réalisation mis en oeuvre, le profil $C(x,y)$ de correction, également appelée carte de correction, est obtenu en déterminant la différence entre le premier et le second profil en chaque point $(x,y)$ d'intérêt :

$$C(x,y) = \hat{h}_2(x,y) - \hat{h}_1(x,y)$$

Pour ce faire, l'étape 108 de détermination de la fonction de correction peut comprendre en outre, préalablement à la soustraction, une étape d'alignement géométrique pour aligner le premier et le second profil l'un par rapport à l'autre, par exemple en translation, en rotation et/ou en grandissement, de sorte que les structures présentes sur ces deux profils se superposent au mieux dans le plan (x,y).

Depuis l'équation précédente, on fait apparaître les termes de déphasage à la réflexion :

$$C(x,y) = h + \psi_2(x,y).\frac{\lambda}{4\pi} - h - \psi_1(x,y).\frac{\lambda}{4\pi}$$

et

$$C(x,y) = \left(\psi_2 - \psi_1(x,y)\right).\frac{\lambda}{4\pi} \; ,$$

où $\psi_i(x,y)$ est le déphasage à la réflexion sur chacune des deux surfaces de référence.

L'étape 108 de détermination de la fonction de correction $C(x,y)$ est réalisée en plusieurs points d'intérêt correspondant à plusieurs positions d'intérêt de la première et de la seconde surface de référence, chaque position d'intérêt de la première surface de référence correspondant à la même position d'intérêt de la seconde surface de référence.

La phase de calibration 104 se termine à l'étape 108.

La pluralité d'objets peut comprendre un seul objet de référence, par exemple un wafer, ayant une surface de référence qui est mesurée avant et après sa métallisation afin d'obtenir le profil de correction. Dans ce cas la seconde surface de référence correspond à la première surface de référence après métallisation.

Alternativement, la pluralité d'objets peut comprendre deux objets de référence distincts dont chacun a une surface de référence, les deux surfaces de référence étant des surfaces correspondantes (c'est-à-dire, les mêmes surfaces) des deux objets de référence, et dont l'une est métallisée et l'autre non. Il peut s'agir dans ce cas de deux wafers issus d'une même série, ou de deux objets distincts sur un wafer de référence dont la surface est partiellement métallisée.

Le procédé 100 selon le mode de réalisation présenté comprend en outre une étape 110 d'acquisition d'un profil d'une surface d'un objet à mesurer de la pluralité d'objets.

L'étape 110 d'acquisition d'un profil comprend une étape 112 d'acquisition de signaux interférométriques de la surface de l'objet à mesurer en plusieurs positions de mesure. Ces positions de mesure de la surface de l'objet doivent correspondre sensiblement aux positions d'intérêt des surfaces de référence pour lesquels l'étape 102 de calibration a été réalisée, ou, plus généralement, à un voisinage des positions d'intérêt des surfaces de référence dans lequel on peut considérer le profil de correction $C(x,y)$ comme connu (par exemple parce que les matériaux présents sont de caractéristiques similaires).

Lors d'une étape 114, un profil mesuré $\hat{h}(x,y)$ est calculé pour à partir des signaux interférométriques. Le calcul est, de préférence, identique à celui explicité pour les mesures de référence ci-dessus. Un profil mesuré est ainsi obtenu pour la surface à inspecter.

La phase d'acquisition 110 du profil à mesurer se termine à l'étape 114.

Une étape 116 d'application de la fonction de correction (ou du profil de correction) $C(x,y)$ au profil mesuré $\hat{h}(x, y)$ est ensuite réalisée pour tous les points ou positions de mesure.

Lors de cette étape 116, le profil de correction est additionné au profil mesuré, afin d'obtenir un signal de profil, ou profil $\tilde{h}(x,y)$ corrigé :

$$\tilde{h}(x, y) = \hat{h}(x, y) + C(x, y).$$

Comme on suppose que les effets de déphasage à la réflexion sont équivalents entre la surface de référence non métallisée et la surface à mesurer, cette dernière expression peut être réécrite sous la forme :

$$\tilde{h}(x, y) = h(x, y) + \psi_1(x, y).\frac{\lambda}{4\pi} + \left(\psi_2 - \psi_1(x, y)\right).\frac{\lambda}{4\pi} = h(x, y) + \psi_2.\frac{\lambda}{4\pi}.$$

Ce profil corrigé $\tilde{h}(x,y)$ représente la forme de la surface mesurée dans laquelle la contribution du déphasage à la réflexion $\psi_1(x,y)$ dépendant des différents matériaux sur la surface mesurée a été éliminée. Lorsqu'on considère la hauteur relative, c'est-à-dire la différence de hauteur entre différents points ou positions de mesure sur la surface mesurée, on constate que la hauteur corrigée relative $\Delta\tilde{h}$ correspond bien à la hauteur relative physique réelle $\Delta h$ :

$$\Delta\tilde{h} = \Delta h,$$

et ce indépendamment des matériaux présents aux positions de mesure sur la surface mesurée.

L'étape 114 d'application de la fonction ou du profil de correction $C(x,y)$ est réalisée pour chaque point ou position de mesure de la surface de l'objet à mesurer correspondant à une même position d'intérêt sur les surfaces de référence. Si les points ou positions de mesure et d'intérêt ne se superposent pas, on tient bien entendu compte de leur relation spatiale.

Pour permettre une application optimale du profil de correction $C(x,y)$, l'étape 114 d'application de la fonction ou du profil de correction $C(x,y)$ peut comprendre en outre, préalablement à l'application de cette fonction de correction, une étape d'alignement géométrique pour aligner le profil mesuré $\hat{h}(x,y)$ avec le premier et/ou le second profil de référence, par exemple en translation, en rotation et/ou en grandissement, de sorte que ces profils se superposent au mieux dans le plan (x,y).

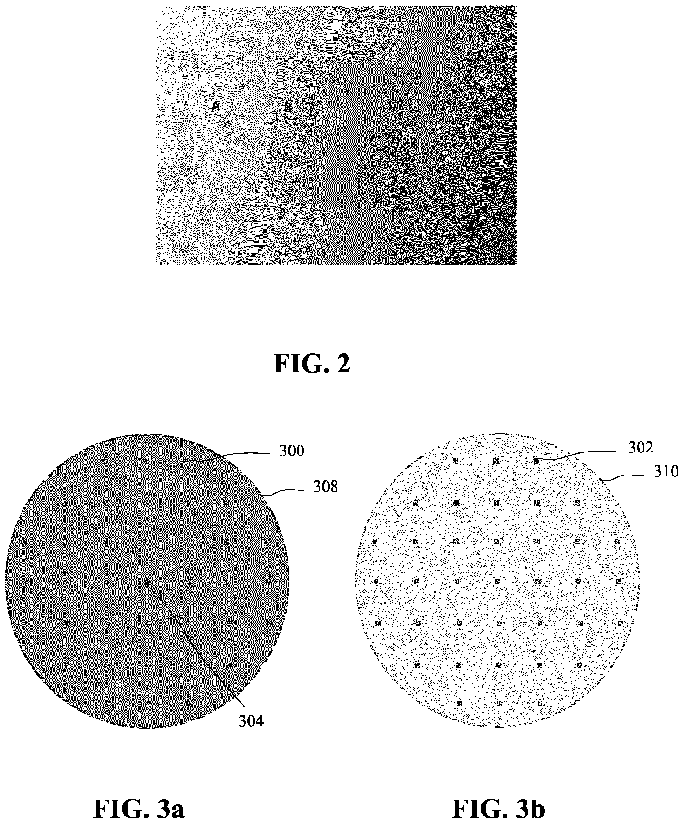

La Figure 2 montre un exemple d'une surface d'un objet à mesurer comportant une partie surélevée (au centre). Deux positions d'intérêt situées respectivement en bas (A) et en haut (B) de la partie surélevée sont également illustrées, pour la détermination d'un profil de correction $C(x,y)$. En effet, sans l'application du procédé selon l'invention, la hauteur relative de ces deux positions mesurées par un procédé interférométrique ne correspondrait pas à la hauteur relative physique.

Les Figures 3a et 3b représentent chacune schématiquement un wafer 308, 310 comportant plusieurs puces 300, 302. Les deux wafers sont issus de la même série de production ou du même lot. Le wafer 310 représente un wafer à contrôler ou mesurer.

Le wafer 308 de la Figure 3a est utilisé comme wafer de référence 308 pour déterminer le profil de correction, par exemple selon l'étape 102 de calibration du procédé 100, en effectuant une mesure d'un premier profil de la surface du wafer avant métallisation et d'un second profil de la surface du wafer après métallisation. Ce profil de correction peut être calculé pour toutes les puces 300 du wafer de référence 308. Alternativement, on peut définir une puce de référence 304, par exemple au centre du wafer de référence 308 et calculer le profil de correction uniquement pour cette puce de référence 304.

Le profil de correction peut ensuite être utilisé pour l'inspection des puces 302 du wafer à mesurer 310, par exemple selon l'étape 110 du procédé 100 de la Figure 1. On obtient ainsi des profils corrigés $\tilde{h}(x,y)$ pour chacune des puces 302 du wafer à mesurer 310. Si le profil de correction a été déterminé uniquement pour la puce de référence 304, on applique cette même fonction de correction pour obtenir des profils corrigés $\tilde{h}(x,y)$ pour chacune des puces 302 du wafer à mesurer 310, en recalant spatialement ce profil de correction.

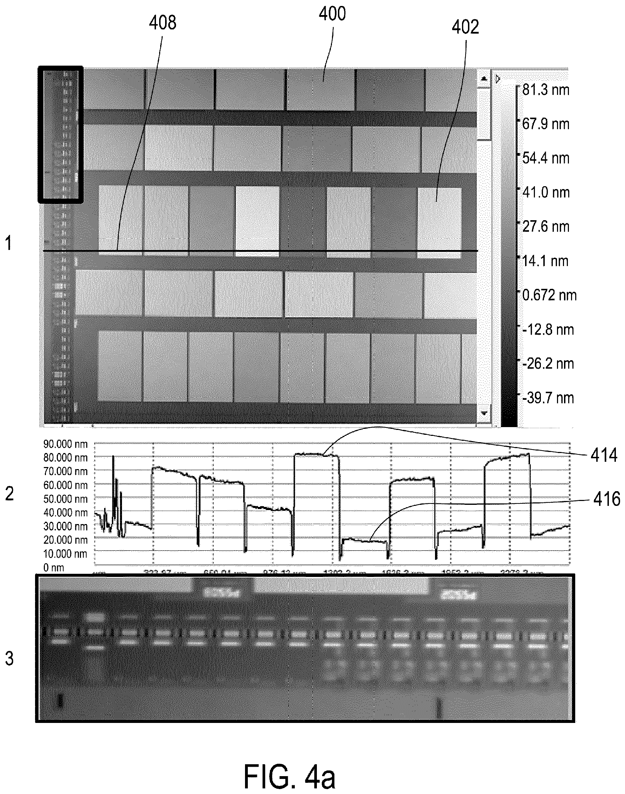

Les Figures 4a-4c montrent des exemples de mesures de profil réalisées conformément au procédé selon l'invention, tel que par exemple le procédé 100 de la Figure 1. En particulier, la surface 400 représentée sur la Figure 4a, est une surface à inspecter d'une puce ou d'une partie de puce présentant des motifs en matériaux dissimilaires, la puce étant appelée puce de test par la suite.

La Figure 4a montre un exemple de mesure non corrigée sur la puce de test, par exemple une puce ou une partie de puce 302 du wafer non-métallisé de la Figure 3b, la mesure étant réalisée, par exemple, selon les étapes 112 et 114 du procédé 100.

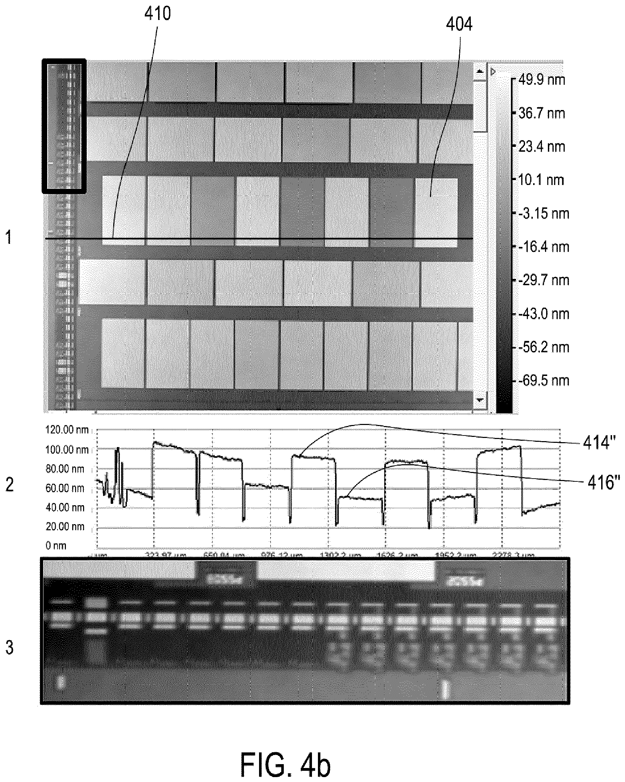

La Figure 4b montre un exemple de mesure corrigée, sur la même puce de test, la mesure étant réalisée, par exemple, selon les étapes 112, 114 et 116 du procédé 100.

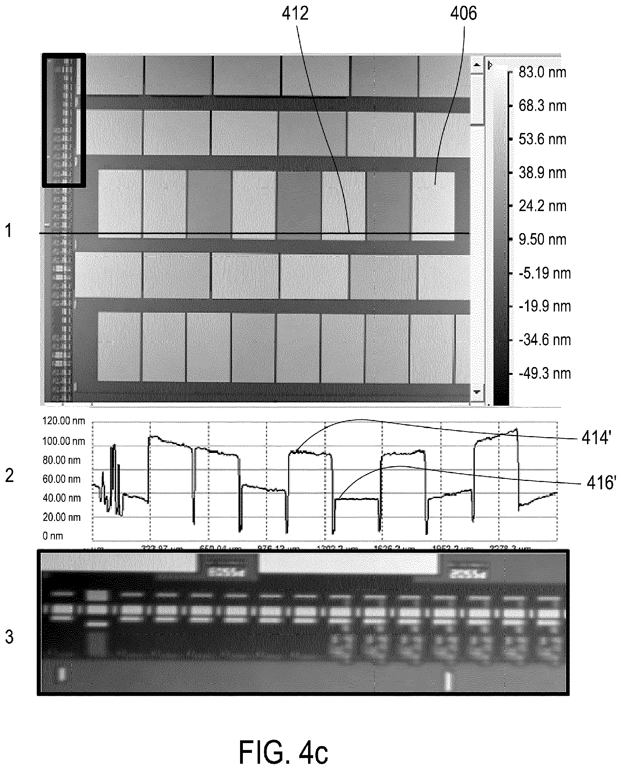

A titre de comparaison par rapport à la mesure corrigée, la Figure 4c montre un exemple de mesure sur une puce ou une partie de puce similaire d'un wafer métallisé, telle que par exemple une puce 300 du wafer métallisé de la Figure 3a. La mesure peut être réalisée, par exemple, selon les étapes 112 et 114 du procédé 100.

Dans les Figures 4a-4c, la première ligne montre respectivement la topographie complète de la puce ou de la partie de puce sur tout le champ du capteur interférométrique. Les puces présentent chacune des éléments ou blocs de différentes hauteurs 402, 404, 406 en différents matériaux.

La deuxième ligne dans les Figures 4a-4c représente respectivement le profil selon les lignes 408, 410, 412 insérées dans les topographies complètes. L'axe des ordonnées correspond à la hauteur mesurée des différents blocs le long des lignes 408, 410, 412. On constate que les hauteurs relatives des blocs diffèrent entre la mesure non corrigée de la puce de test non métallisée (Figure 4a) et la mesure sur la puce métallisée (Figure 4c), et que les hauteurs relatives des blocs sont similaires pour la mesure corrigée (Figure 4b) et la mesure sur la puce métallisée (Figure 4c).

On peut considérer, par exemple, la hauteur relative entre le quatrième et le cinquième bloc pour les trois mesures. La hauteur relative entre le bloc 414 et le bloc 416 est d'environ 60 nm pour la puce de test non corrigée (Figure 4a), et la hauteur relative correspondante entre le bloc 414' et le bloc 416' est d'environ 40 nm pour la puce métallisée (Figure 4c) à la même localisation. On retrouve effectivement la même hauteur relative d'environ 40 nm entre les blocs 414" et 416" pour la mesure corrigée sur la puce de test (Figure 4b). On constate également que la configuration de l'ensemble des blocs est bien reproduite pour la mesure corrigée (Figure 4b) par rapport à la mesure sur la puce métallisée (Figure 4c).

La troisième ligne dans les Figures 4a-4c représente le détail encadré de la première ligne du champ de mesure pour chacune des mesures. Ce détail permet notamment d'apprécier la différence d'apparence entre la mesure non corrigée et la mesure corrigée sur la puce de test (Figures 4a et 4b), ainsi que la similarité entre la mesure corrigée et la mesure sur la puce métallisée (Figures 4a et 4c).

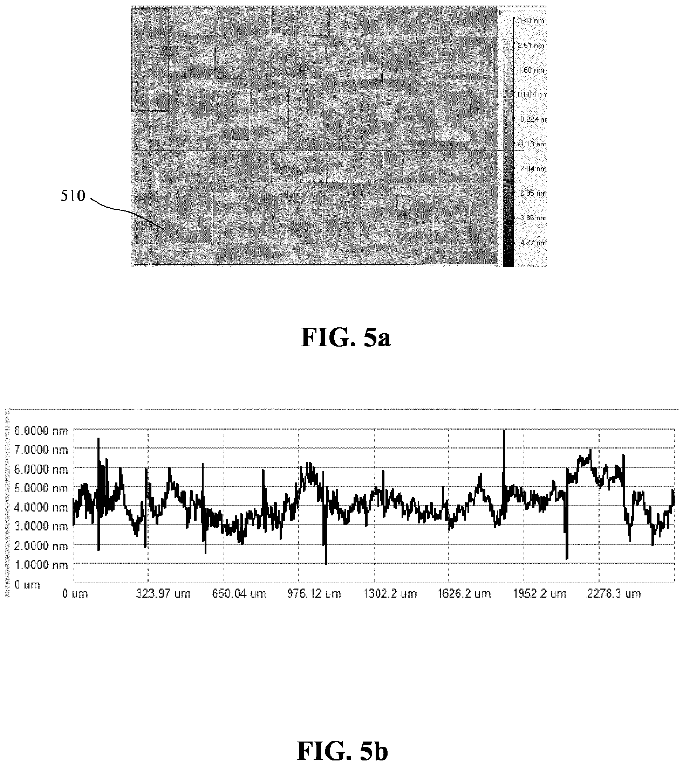

Les Figures 5a et 5b représentent à titre d'exemple la différence entre le profil corrigé de la puce de test, représenté sur la Figure 4b, et le profil de la puce métallisée, représenté sur la Figure 4c. Cette différence permet de montrer la précision de la topographie corrigée par rapport à la topographie sur la couche métallisée qui est considérée comme « vérité terrain ». La Figure 5a montre cette différence sur le champ de mesure entier, et la Figure 5b montre cette différence selon la ligne 510 insérée dans la Figure 5a.

Sur la Figure 5a, la différence entre les topographies mesurées pour la puce de test et la puce métallisée est représentée en niveaux de gris. On constate que l'amplitude de la différence ne dépasse pas quelques nanomètres sur l'ensemble du champ de mesure. Ce résidu est plus élevé au niveau des bords des blocs, ce qui peut être dû à des erreurs de positionnement résiduelles entre les puces de références, ou entre le profil de correction et la puce de test.

La Figure 6 est une représentation schématique d'un exemple de réalisation non limitatif d'un système de mesure selon l'invention.

Le système 600, représenté sur la Figure 6, comprend une source de lumière 602, par exemple à base de diodes électroluminescentes ou de source halogène. La source lumineuse 602 génère un faisceau d'illumination 604 dans des longueurs d'ondes visibles et/ou proche infrarouge. Ce faisceau d'illumination 604 est dirigé vers un interféromètre à plein champ 606 par un cube ou une lame séparatrice 608.

Dans l'interféromètre à plein champ 606, le faisceau d'illumination 604 est séparé en un faisceau de référence qui illumine un miroir de référence et un faisceau de mesure qui illumine une surface 400 à inspecter d'un objet. Cette surface 400 à inspecter peut-être, par exemple, celle représentée sur la Figure 4a. La lumière réfléchie respectivement par la surface 400 et par le miroir de référence est redirigée vers un détecteur matriciel 610, par exemple de type CCD ou CMOS.

Le système 600 comprend des optiques et des lentilles, dont un objectif d'imagerie, agencés de sorte à imager la surface 400 sur le détecteur matriciel 610. Lorsque la différence de trajets optiques entre le faisceau de mesure et le faisceau de référence est inférieure à la longueur de cohérence de la source de lumière 602, des franges d'interférences dues aux interférences entre le faisceau de mesure et le faisceau de référence sont également visibles.

Différents types d'interféromètres à plein champ 606 sont utilisables dans le cadre de l'invention, par exemple un interféromètre à décalage de phase ou un interféromètre à balayage vertical. Ces interféromètres sont bien connus de l'homme du métier et ne seront donc pas détaillés ici.

Le système 600 comprend également un dispositif 614 de dépôt de couche de métal sur la seconde surface de référence, cette métallisation étant réalisée préalablement à l'acquisition du signal interférométrique de la seconde surface de référence. Le dispositif 614 de dépôt peut être par exemple un dispositif de dépôt sous vide par évaporation (PVD). Des dispositifs de dépôt de couches métalliques sont bien connus de l'homme du métier et ne serons pas détaillés ici.

Le système 600 comprend en outre un module 612 électronique/informatique, tel qu'un processeur ou une puce électronique ou encore un ordinateur par exemple, relié au détecteur matriciel 610, et configuré pour mettre en oeuvre toutes les étapes du procédé selon l'invention, telles que par exemple les étapes 104-116 du procédé 100 décrit ci-dessus en référence à la Figure 1.

Bien sûr, l'invention n'est pas limitée aux exemples qui viennent d'être décrits et de nombreux aménagements peuvent être apportés à ces exemples sans sortir du cadre de l'invention.

## Revendications

1. Procédé (100) de mesure du profil d'une surface (400) d'un objet à mesurer (300), notamment comprenant des zones en au moins deux matériaux différents, le procédé comprenant une étape de :

   - acquisition (110) d'un signal de profil de la surface de l'objet à mesurer ;

   dans lequel l'objet à mesurer (300) fait partie d'une pluralité d'objets sensiblement identiques, la pluralité d'objets comprenant en outre au moins un objet de référence (304, 306) ayant au moins une surface de référence, le procédé (100) comprenant en outre les étapes suivantes :

   - acquisition d'un premier signal de profil de référence d'une première surface de référence non métallisée;
   - acquisition d'un second signal de profil de référence d'une seconde surface de référence, la seconde surface de référence étant métallisée et correspondant à la première surface de référence;
   - détermination (102) d'une fonction de correction, à partir du premier signal de profil de référence et du second signal de profil de référence; et
   - application (116) de la fonction de correction au signal de profil de la surface (400) de l'objet à mesurer (300) pour obtenir un signal de profil corrigé ;

   dans lequel les signaux de profil sont obtenus à partir de mesures interférométriques (104, 112).

2. Procédé (100) selon la revendication 1, **caractérisé en ce que** les étapes d'acquisition (110) d'un signal de profil et d'application (116) de la fonction de correction sont réalisées pour une pluralité d'objets à mesurer issus d'une même série de production.

3. Procédé (100) selon la revendication précédente, **caractérisé en ce que** l'étape de détermination (102) d'une fonction de correction est réalisée avec au moins un objet de référence (304, 306) issu d'une même série de production que les objets à mesurer.

4. Procédé (100) selon l'une des revendications 1 à 3, **caractérisé en ce que** la seconde surface de référence correspond à la première surface de référence, métallisée, d'un même objet de référence.

5. Procédé (100) selon l'une des revendications 1 à 3, **caractérisé en ce que** la première surface de référence et la seconde surface de référence sont des surfaces correspondantes de deux objets de référence (304, 306) différents.

6. Procédé (100) selon l'une des revendications précédentes, **caractérisé en ce qu'**il comprend une étape de métallisation, comprenant un dépôt conforme d'une couche de métal sur une surface de référence d'un objet de référence.

7. Procédé (100) selon l'une quelconque des revendications précédentes, **caractérisé en ce que** l'étape (102) de détermination de la fonction de correction est réalisée en plusieurs positions, dites d'intérêt, de la première et de la seconde surface de référence, de localisation identique sur respectivement la première surface de référence et la seconde surface de référence.

8. Procédé (100) selon la revendication précédente, **caractérisé en ce que** :

   - l'étape (110) d'acquisition d'un signal de profil est réalisée en plusieurs positions, dites de mesure, de la surface de l'objet à mesurer, de localisation identique aux positions d'intérêt des surfaces de référence, ou localisés dans des zones de même matériaux que les positions d'intérêt ; et
   - l'étape (116) d'application de la fonction de correction est réalisée pour lesdites positions de mesure de la surface (400) de l'objet (300), en prenant en compte les positions d'intérêt correspondantes.

**9.** Procédé (100) selon l'une quelconque des revendications précédentes, **caractérisé en ce que** l'étape (102) de détermination d'une fonction de correction comprend une différence entre le second signal de profil de référence et le premier signal de profil de référence.

**10.** Procédé (100) selon l'une quelconque des revendications précédentes, **caractérisé en ce que** l'étape (116) d'application de la fonction de correction comprend une sommation d'un signal de profil de correction et du signal de profil.

**11.** Procédé (100) selon l'une des revendications précédentes, **caractérisé en ce qu'**il comprend en outre au moins l'une des étapes suivantes :

- une étape d'alignement géométrique du second signal de profil de la seconde surface de référence par rapport au premier signal de profil de la première surface de référence ;
- une étape d'alignement géométrique du signal de profil de la surface de l'objet à mesurer par rapport au premier ou au second signal de profil d'une surface de référence.

**12.** Procédé selon l'une quelconque des revendications précédentes, **caractérisé en ce qu'**il est mis en oeuvre pour mesurer le profil d'une surface d'un objet à mesurer comprenant un substrat tel qu'un wafer, ou un élément tel qu'une puce réalisée sur un substrat.

**13.** Procédé selon la revendication 12, **caractérisé en ce qu'**il comprend des étapes :

- de détermination (102) d'une fonction de correction à partir d'au moins un substrat de référence,
- d'acquisition d'un signal de profil à partir d'un autre substrat à mesurer.

**14.** Dispositif (600) de mesure du profil d'une surface (400) d'un objet à mesurer (300), la surface (400) comprenant des zones en au moins deux matériaux différents, le dispositif comprenant :

- un dispositif (610) de mesure interférométrique agencé pour acquérir un signal de profil de la surface (400) de l'objet à mesurer (300), l'objet à mesurer (300) faisant partie d'une pluralité d'objets sensiblement identiques, la pluralité d'objets comprenant en outre au moins un objet de référence ayant au moins une surface de référence, le dispositif (610) de mesure interférométrique étant en outre agencé pour acquérir un premier signal de profil de référence d'une première surface de référence non métallisée et un second signal de profil de référence d'une seconde surface de référence métallisée et correspondant à la première surface de référence;
- un module (612) de traitement, configuré pour déterminer une fonction de correction à partir du premier signal de profil de référence et du second signal de profil de référence , et appliquer ladite fonction de correction au signal de profil de la surface de l'objet à mesurer pour obtenir un signal de profil corrigé.

**15.** Dispositif (600) selon la revendication précédente, **caractérisé en ce que** le dispositif (610) de mesure interférométrique comprend un capteur interférométrique plein champ.

**16.** Dispositif (600) selon la revendication précédente, **caractérisé en ce que** le capteur interférométrique (610) comprend l'un d'un interféromètre à décalage de phase et d'un interféromètre à balayage vertical.

**Patentansprüche**

**1.** Verfahren (100) zum Messen des Profils einer Oberfläche (400) eines zu messenden Objektes (300), insbesondere umfassend Zonen aus mindestens zwei unterschiedlichen Materialien, wobei das Verfahren einen Schritt:

- der Erfassung (110) eines Profilsignals von der Oberfläche des zu messenden Objektes umfasst; wobei das zu messende Objekt (300) Teil einer Vielzahl von im Wesentlichen identischen Objekten ist, wobei die Vielzahl von Objekten ferner mindestens ein Referenzobjekt (304, 306) umfasst, das mindestens eine Referenzoberfläche hat, wobei das Verfahren (100) ferner die folgenden Schritte umfasst:
- Erfassung eines ersten Referenz-Profilsignals von einer ersten nicht-metallisierten Referenzoberfläche;
- Erfassung eines zweiten Referenz-Profilsignals von einer zweiten Referenzoberfläche, wobei die zweite Referenzoberfläche metallisiert ist und der ersten Referenzoberfläche entspricht;
- Bestimmung (102) einer Korrekturfunktion auf Basis des ersten Referenz-Profilsignals und des zweiten Referenz-Profilsignals; und

- Anwendung (116) der Korrekturfunktion auf das Profilsignal der Oberfläche (400) des zu messenden Objektes (300), um ein korrigiertes Profilsignal zu erhalten;

wobei die Profilsignale aus interferometrischen Messungen (104, 112) erhalten werden.

2. Verfahren (100) nach Anspruch 1, **dadurch gekennzeichnet, dass** die Schritte der Erfassung (110) eines Profilsignals und der Anwendung (116) der Korrekturfunktion für eine Vielzahl von zu messenden Objekten, die aus einer selben Produktionsreihe stammen, durchgeführt werden.

3. Verfahren (100) nach dem vorhergehenden Anspruch, **dadurch gekennzeichnet, dass** der Schritt der Bestimmung (102) einer Korrekturfunktion mit mindestens einem Referenzobjekt (304, 306) durchgeführt wird, der aus derselben Produktionsreihe wie die zu messenden Objekte stammt.

4. Verfahren (100) nach einem der Ansprüche 1 bis 3, **dadurch gekennzeichnet, dass** die zweite Referenzoberfläche der ersten, metallisierten Referenzoberfläche eines selben Referenzobjektes entspricht.

5. Verfahren (100) nach einem der Ansprüche 1 bis 3, **dadurch gekennzeichnet, dass** die erste Referenzoberfläche und die zweite Referenzoberfläche entsprechende Oberflächen zweier unterschiedlicher Referenzobjekte (304, 306) sind.

6. Verfahren (100) nach einem der vorhergehenden Ansprüche, **dadurch gekennzeichnet, dass** es einen Metallisierungsschritt, umfassend ein konformes Aufbringen einer Metallschicht auf eine Referenzoberfläche eines Referenzobjektes, umfasst.

7. Verfahren (100) nach einem der vorhergehenden Ansprüche, **dadurch gekennzeichnet, dass** der Schritt (102) der Bestimmung der Korrekturfunktion an mehreren so genannten relevanten Positionen der ersten und der zweiten Referenzoberfläche mit identischer Lokalisierung auf der ersten Referenzoberfläche bzw. der zweiten Referenzoberfläche erfolgt.

8. Verfahren (100) nach dem vorhergehenden Anspruch, **dadurch gekennzeichnet, dass**:

- der Schritt (110) der Erfassung eines Profilsignals an mehreren so genannten Messpositionen der Oberfläche des zu messenden Objektes mit identischer Lokalisierung wie die relevanten Positionen der Referenzoberflächen oder in Zonen aus demselben Material wie die relevanten Positionen lokalisiert, durchgeführt wird; und
- der Schritt (116) der Anwendung der Korrekturfunktion für die Messpositionen der Oberfläche (400) des Objektes (300) unter Berücksichtigung der entsprechenden relevanten Positionen durchgeführt wird.

9. Verfahren (100) nach einem der vorhergehenden Ansprüche, **dadurch gekennzeichnet, dass** der Schritt (102) der Bestimmung einer Korrekturfunktion eine Subtraktion zwischen dem zweiten Referenz-Profilsignal und dem ersten Referenz-Profilsignal umfasst.

10. Verfahren (100) nach einem der vorhergehenden Ansprüche, **dadurch gekennzeichnet, dass** der Schritt (116) der Anwendung der Korrekturfunktion eine Summierung eines Korrektur-Profilsignals und des Profilsignals umfasst.

11. Verfahren (100) nach einem der vorhergehenden Ansprüche, **dadurch gekennzeichnet, dass** es ferner mindestens einen der folgenden Schritte umfasst:

- einen Schritt der geometrischen Ausrichtung des zweiten Profilsignals der zweiten Referenzoberfläche in Bezug zum ersten Profilsignal der ersten Referenzoberfläche;
- einen Schritt der geometrischen Ausrichtung des Profilsignals der Oberfläche des zu messenden Objektes in Bezug zum ersten oder zum zweiten Profilsignal einer Referenzoberfläche.

12. Verfahren nach einem der vorhergehenden Ansprüche, **dadurch gekennzeichnet, dass** es eingesetzt wird, um das Profil einer Oberfläche eines zu messenden Objektes, umfassend ein Substrat, wie einen Wafer, oder eines Elements, wie eines auf einem Substrat hergestellten Chips, zu messen.

13. Verfahren nach Anspruch 12, **dadurch gekennzeichnet, dass** es die folgenden Schritte umfasst:

- Bestimmung (102) Korrekturfunktion auf Basis mindestens eines Referenzsubstrats,
- Erfassung eines Profilsignals auf Basis eines weiteren zu messenden Substrats.

14. Vorrichtung (600) zum Messen des Profils einer Oberfläche (400) eines zu messenden Objektes (300), wobei die Oberfläche (400) Zonen aus mindestens zwei unterschiedlichen Materialien umfasst, wobei die Vorrichtung umfasst:

- eine Vorrichtung (610) zum interferometrischen Messen, die dazu vorgesehen ist, ein Profilsignal der Oberfläche (400) des zu messenden Objektes (300) zu erfassen, wobei das zu messende Objekt (300) Teil einer Vielzahl von im Wesentlichen identischen Objekten ist, wobei die Vielzahl von Objekten ferner mindestens ein Referenzobjekt umfasst, das mindestens eine Referenzoberfläche aufweist, wobei die Vorrichtung (610) zum interferometrischen Messen ferner dazu vorgesehen ist, ein erstes Referenz-Profilsignal einer ersten nicht-metallisierten Referenzoberfläche und ein zweites Referenz-Profilsignal einer zweiten metallisierten Referenzoberfläche, die der ersten Referenzoberfläche entspricht, zu erfassen;
- ein Verarbeitungsmodul (612), das eingerichtet ist, um eine Korrekturfunktion auf Basis des ersten Referenz-Profilsignals und des zweiten Referenz-Profilsignals zu bestimmen und die Korrekturfunktion auf das Profilsignal der Oberfläche des zu messenden Objektes anzuwenden, um ein korrigiertes Profilsignal zu erhalten.

15. Vorrichtung (600) nach dem vorhergehenden Anspruch, **dadurch gekennzeichnet, dass** die Vorrichtung (610) zum interferometrischen Messen einen interferometrischen Feldsensor umfasst.

16. Vorrichtung (600) nach dem vorhergehenden Anspruch, **dadurch gekennzeichnet, dass** der interferometrische Sensor (610) einen von einem Interferometer mit Phasenversatz und einem Interferometer mit Vertikalscan umfasst.

## Claims

1. Method (100) for measuring the profile of a surface (400) of an object to be measured (300), in particular comprising zones or structures made from at least two different materials, the method comprising a step of:

   - acquiring (110) a profile signal of the surface of the object to be measured;

   wherein the object to be measured (300) forms part of a plurality of substantially identical objects, the plurality of objects also comprising at least one reference object (304, 306) having at least one reference surface, the method (100) further comprising the following steps:

   - acquiring a first reference profile signal of a first non-metallized reference surface;
   - acquiring a second reference profile signal of a second reference surface, the second reference surface being metallized and corresponding to the first reference surface;
   - determining (102) a correction function, from the first reference profile signal and the second reference profile signal; and
   - applying (116) the correction function to the profile signal from the surface (400) of the object to be measured (300), in order to obtain a corrected profile signal;

   in which the profile signals are obtained from interferometric measurements (104, 112).

2. Method (100) according to claim 1, **characterized in that** the steps of acquiring (110) a profile signal and applying (116) the correction function are carried out for a plurality of objects to be measured originating from one and the same production series.

3. Method (100) according to the preceding claim, **characterized in that** the step of determining (102) a correction function is carried out with at least one reference object (304, 306) originating from one and the same production series as the objects to be measured.

4. Method (100) according to one of claims 1 to 3, **characterized in that** the second reference surface corresponds to the first, metallized, reference surface, of one and the same reference object.

5. Method (100) according to one of claims 1 to 3, **characterized in that** the first reference surface and the second reference surface are corresponding surfaces of two different reference objects (304, 306).

6. Method (100) according to one of the preceding claims, **characterized in that** it comprises a metallization step, comprising deposition of a conforming layer of metal on a reference surface of a reference object.

7. Method (100) according to any one of the preceding claims, **characterized in that** the step (102) of determining the correction function is carried out at several positions, called positions of interest, of the first and second reference surface, located identically on the first reference surface and the second reference surface, respectively.

8. Method (100) according to the preceding claim, **characterized in that**:

   - the step (110) of acquiring a profile signal is carried out at several positions, called measurement positions, of the surface of the object to be measured, located identically to the positions of interest of the reference surfaces, or located in zones of the same materials as the positions of interest; and
   - the step (116) of applying the correction function is carried out for said measurement positions of the surface (400) of the object (300), by taking account of the corresponding positions of interest.

9. Method (100) according to any one of the preceding claims, **characterized in that** the step (102) of determining a correction function comprises a difference between the second reference profile signal and the first reference profile signal.

10. Method (100) according to any one of the preceding claims, **characterized in that** the step (116) of applying the correction function comprises a summation of a correction profile signal and the profile signal.

11. Method (100) according to one of the preceding claims, **characterized in that** it also comprises at least one of the following steps:

   - a step of geometrical alignment of the second profile signal from the second reference surface with respect to the first profile signal from the first reference surface;
   - a step of geometrical alignment of the profile signal from the surface of the object to be measured with respect to the first or second profile signal of a reference surface.

12. Method according to any one of the preceding claims, **characterized in that** it is implemented in order to measure the profile of a surface of an object to be measured comprising a substrate such as a wafer, or an element such as a chip produced on a substrate.

13. Method according to claim 12, **characterized in that** it comprises steps of:

   - determining (102) a correction function from at least one reference substrate,
   - acquiring a profile signal from another substrate to be measured.

14. Device (600) for measuring the profile of a surface (400) of an object to be measured (300), the surface (400) comprising zones made from at least two different materials, the device comprising:

   - an interferometric measurement device (610) arranged for acquiring a first profile signal of the surface (400) of the object to be measured (300), the object to be measured (300) forming part of a plurality of substantially identical objects, the plurality of objects also comprising at least one reference object having at least one reference surface, the interferometric measurement device (610) being further adapted for acquiring a first reference profile signal from a first non-metallized reference surface and a second reference profile signal from a second, metallized reference surface and corresponding to the first reference surface; and
   - a processing module (612) configured in order to determine a correction function from the first reference profile signal and the second reference profile signal, and to apply said correction function to the profile signal from the surface of the object to be measured in order to obtain a corrected profile signal.

15. Device (600) according to the preceding claim, **characterized in that** the interferometric measurement device (610) comprises a full-field interferometric sensor.

16. Device (600) according to the preceding claim, **characterized in that** the interferometric sensor (610) comprises one from a phase-shifting interferometer and a vertical scanning interferometer.

100

Mesure de signaux interférométriques en plusieurs points de mesure sur surfaces de référence — 104

Calcul d'un profil pour chaque surface de référence — 102 — 106

Détermination d'un profil de correction à partir des profils de référence — 108

Mesures de signaux interférométriques en plusieurs points de mesure sur la surface à mesurer — 112

Calcul d'un profil pour la surface mesurée — 110 — 114

Application du profil de correction au profil de la surface mesurée — 116

# FIG. 1

**FIG. 2**

**FIG. 3a**

**FIG. 3b**

FIG. 4a

FIG. 4b

FIG. 4c

510

**FIG. 5a**

**FIG. 5b**

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120229621 A1